(19) **Europäisches Patentamt / European Patent Office / Office européen des brevets**

(11) **EP 2 844 858 B1**

(12) **FASCICULE DE BREVET EUROPEEN**

(45) Date de publication et mention
de la délivrance du brevet:
**11.03.2020 Bulletin 2020/11**

(21) Numéro de dépôt: **13725407.4**

(22) Date de dépôt: **02.05.2013**

(51) Int Cl.:
*F02D 21/08* (2006.01)   *F02D 41/02* (2006.01)
*F02D 41/14* (2006.01)   *F01N 3/10* (2006.01)
*F02M 26/05* (2016.01)   *F02M 26/06* (2016.01)
*F02D 41/18* (2006.01)   *F02B 37/00* (2006.01)
*F02M 26/10* (2016.01)   *F02M 26/15* (2016.01)
*F02M 26/23* (2016.01)

(86) Numéro de dépôt international:
**PCT/FR2013/050975**

(87) Numéro de publication internationale:
**WO 2013/164548 (07.11.2013 Gazette 2013/45)**

(54) **PROCEDE DE TRAITEMENT DES GAZ D'ECHAPPEMENT D'UN MOTEUR SURALIMENTE AVEC RECYCLAGE DES GAZ D'ECHAPPEMENT**

VERFAHREN ZUR ABGASNACHBEHANDLUNG EINES AUFGELADENEN VERBRENNUNGSMOTORS MIT ABGASRÜCKFÜHRUNG

METHOD OF EXHAUST GAS AFTERTREATMENT OF A SUPERCHARGED COMBUSTION ENGINE WITH EXHAUST GAS RECIRCULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2012 FR 1254040**

(43) Date de publication de la demande:
**11.03.2015 Bulletin 2015/11**

(73) Titulaire: **Renault s.a.s.**
**92100 Boulogne-Billancourt (FR)**

(72) Inventeur: **RACHER, David**
**F-78000 Versailles (FR)**

(56) Documents cités:
**EP-A1- 1 965 050      WO-A2-2009/148917**
**FR-A3- 2 927 369      US-A1- 2011 162 626**

**Description**

L'invention concerne un procédé de commande d'un moteur à combustion interne suralimenté, comportant un circuit de recyclage à haute pression et un circuit de recyclage à basse pression des gaz d'échappement. Elle trouve une application particulièrement avantageuse pour les moteurs diesel à injection directe ou indirecte.

ETAT DE LA TECHNIQUE

De nombreux moteurs à combustion interne suralimentés sont équipés de moyens de traitement des gaz d'échappement comportant deux circuits de dérivation des gaz d'échappement, dits « circuits EGR » (de l'acronyme anglais : Exhaust Gas Recycling).

Un premier circuit EGR à haute pression prélève une partie des gaz d'échappement en amont de la turbine d'un turbocompresseur du moteur et les réinjecte en aval du compresseur du turbocompresseur. De manière connue, une telle recirculation permet de réduire les émissions d'hydrocarbures imbrûlés (HC) et de monoxyde de carbone (CO) provenant de la combustion dans le moteur.

Un deuxième circuit EGR à basse pression prélève une partie des gaz d'échappement en aval de la turbine et les réinjecte en amont du compresseur De manière connue, une telle recirculation permet de réduire les émissions d'oxydes d'azote ($NO_x$) et de dioxyde de carbone ($CO_2$) provenant de la combustion dans le moteur.

Ce double circuit vise a permettre aux véhicules automobiles équipés d'un moteur qui en est pourvu de respecter la législation des pays dans lesquels ils circulent. Ces législations fixent en effet des limites maximales aux différentes quantités de molécules polluantes (NOx, HC et CO) émises dans les gaz d'échappement, et en outre le niveau des émissions de $CO_2$ détermine souvent la fiscalité applicable à ces véhicules.

Comme le niveau des émissions de $CO_2$ est une valeur représentative de la consommation en carburant du véhicule, il est avantageux d'utiliser autant que possible le circuit d'EGR à basse pression Néanmoins, il est connu que la réduction des émissions de $NO_x$ et de $CO_2$ par un tel circuit s'opère au détriment des émissions de HC et de CO, en raison de la faible température des gaz d'échappement recyclés par celui-ci, qui entraine des risques de combustion incomplète.

On connaît divers procédés de contrôle d'un système de recirculation des gaz d'échappement qui visent à réduire ces risques de combustion incomplète, c'est-à-dire à limiter les émissions de HC et de CO.

Par exemple, la publication WO20081068574-A1 divulgue un procédé par lequel seul le circuit EGR à haute pression est utilisé dans un domaine d'utilisation du moteur à faible régime et faible charge où des risques élevés de combustion incomplète sont détectés. Dans un domaine de régime et de charge élevés, où ces risques sont inexistants, seul le circuit EGR à basse pression est utilisé. Dans un domaine de régime et de charge intermédiaires, les deux circuits sont utilisés simultanément. Cette publication propose également d'adapter la détection des risques de combustion incomplète dans le moteur, c'est-à-dire la détermination des seuils do régime et de charge précités, en fonction de la température ambiante ou de température du liquide de refroidissement du moteur.

Les procédés connus visent à limiter les émissions de HC et de CO à la source, c'est-à-dire directement à la sortie do la culasse du moteur, avant qu'elles no soient traitées par un catalyseur équipant la ligne d'échappement du véhicule. Ils ne tiennent pas compte de l'efficacité d'un tel catalyseur, c'est-à-dire de sa capacité à transformer en molécules inoffensives des émissions de HC et de CO issues de la combustion. De ce fait, ils se privent d'utiliser l'EGR à basse pression sur des domaines de régime et de charge où les émissions de HC et de CO à la source seraient plus élevées mais mieux traitées ensuite grâce à une efficacité accrue du catalyseur. Cette précaution conduit à augmenter inutilement la consommation de carburant. Le document EP 1 965 050 A1 divulgue un pilotage de proportion de gaz EGR basse pression / haute pression selon une température d'un catalyseur. Pour des températures à l'extérieur d'une plage d'efficacité optimale du catalyseur, la proportion de gaz EGR est modifiée (augmentation pour températures hautes et diminution pour températures basses).

RESUME DE L'INVENTION

L'invention propose de remédier aux défauts des procédés de contrôle connus. Elle propose pour cela un procédé de traitement des gaz d'échappement d'un moteur à combustion interne suralimenté de véhicule automobile selon la revendication 1.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente un moteur à combustion interne équipé d'un dispositif de traitement des gaz d'échappement comportant un circuit EGR à haute pression (dit EGR HP) et un circuit EGR à basse pression (dit EGR BP), apte à la mise en œuvre du procédé selon l'invention,
- la figure 2 est un graphique illustrant la relation entre la température des gaz d'échappement dans un catalyseur neuf et l'efficacité de celui-ci, pour un débit de gaz d'échappement constant.
- la figure 3 est un graphique illustrant la relation entre le débit des gaz d'échappement dans un catalyseur neuf et l'efficacité de celui-ci, pour une température de gaz d'échappement constante ;
- la figure 4 est un tableau représentant un extrait d'une cartographie d'efficacité d'un catalyseur neuf en fonction de la température et du débit, obtenu à partir de plusieurs balayages de température et de débit conformément aux figures 2 et 3 ;
- les figures 5 et 6 sont des graphiques illustrant respectivement l'impact du kilométrage parcouru par un véhicule et de sa vitesse sur la déchéance d'efficacité d'un catalyseur qui l'équipe ; et,
- la figure 7 est un logigramme du procédé selon l'invention.

## DESCRIPTION DETAILLEE DES FIGURES

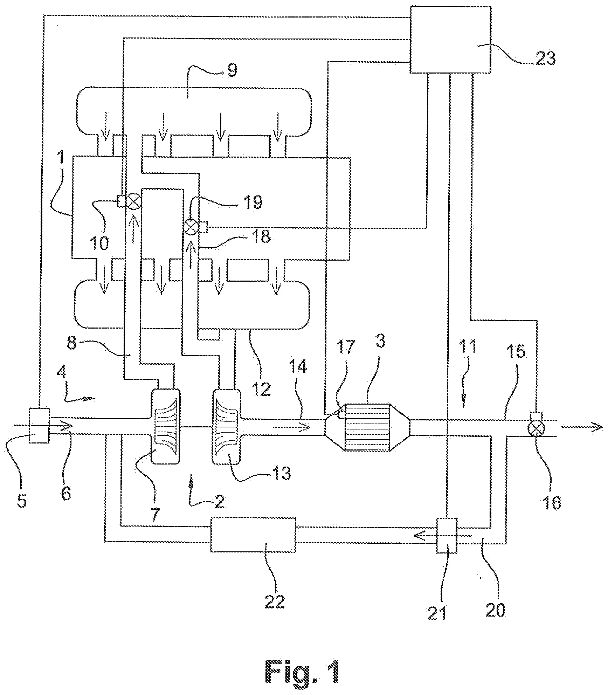

La figure 1 représente un moteur 1 à combustion interne, par exemple un moteur diesel de véhicule automobile. Le moteur 1 est suralimenté par un turbocompresseur 2. Ses gaz d'échappement sont traités par un catalyseur d'oxydation 3 qui permet de réduire les molécules d'hydrocarbures imbrûlés (HC) et de monoxyde de carbone (CO).

Le moteur 1 est équipé d'un circuit d'alimentation d'air 4 comprenant un débitmètre d'air frais 5, une conduite d'alimentation 6 dont l'entrée est reliée au débitmètre 5 et la sortie à un compresseur 7 du turbocompresseur 2, et un conduit d'admission 8 dont l'entrée est reliée au compresseur 7, et dont la sortie débouche dans un collecteur d'admission 9 du moteur 1. Le conduit d'admission 8 comporte une vanne de réglage du débit d'air 10.

Le moteur 1 est équipé d'un circuit d'échappement des gaz brûlés 11, comprenant un collecteur d'échappement 12, une turbine 13 du turbocompresseur 2, une conduite d'échappement 14, le catalyseur d'oxydation 3 et un pot d'échappement 15. Le pot d'échappement 15 est équipé d'une vanne d'échappement 16.

Le catalyseur d'oxydation 3 est équipé de moyens de détermination de la température des gaz d'échappement $T_{ech}$ qui le traversent, par exemple un capteur de température 17.

Le circuit d'échappement 11 qui vient d'être décrit présente doux dérivations qui prélèvent une partie des gaz d'échappement et les recyclent dans le circuit d'admission 4, c'est-à-dire à l'entrée du moteur 1. au lieu de les rejeter dans l'atmosphère.

La première dérivation, dite aussi circuit EGR à haute pression, ou circuit EGR HP, prélève une partie des gaz à la sortie du moteur 1, par exemple à partir du collecteur d'échappement 12, c'est-à-dire en amont de la turbine 13 (dans le sens de circulation des gaz d'échappement), et renvoie ces gaz en aval du compresseur 7 (dans le sens de circulation de l'air).

Plus précisément, ces gaz sont collectés par un conduit EGR HP 18 qui prend naissance à la sortie du collecteur d'échappement 12 et qui débouche dans le conduit d'admission 8, en aval de la vanne de réglage du débit d'air 10. Le conduit EGR HP 18 est équipé d'une vanne EGR à haute pression 19, dont la position permet de régler le débit des gaz circulant dans le circuit EGR HP, dit débit de gaz EGR HP $Q_{EGR\ HP}$.

La deuxième dérivation, dite aussi circuit EGR à basse pression, ou circuit EGR BP, prélève une partie des gaz d'échappement en aval du catalyseur d'oxydation 3 (dans le sens de circulation des gaz d'échappement), et renvoie ces gaz en amont du compresseur 7 (dans le sens de circulation de l'air).

Plus précisément, ces gaz sont collectés par un conduit EGR BP 20 qui prend naissance dans le pot d'échappement 15, en amont de la vanne d'échappement 16 (dans le sens de circulation des gaz d'échappement), et qui débouche dans la conduite d'admission 6, en aval du débitmètre 5 (dans le sens de circulation de l'air). Ce conduit EGR à basse pression 20 est équipé d'un dèbitmètre do gaz EGR à basse pression 21 et d'un refroidisseur 22. Ici, la vanne d'échappement 16, lorsqu'elle est en position refermée, empêche les gaz brûlés de s'échapper du moteur 1, ce qui fait augmenter la pression à l'intérieur du circuit EGR BP. Cette augmentation de pression favorise le passage d'un débit de gaz brûlés, dit débit de gaz EGR BP $Q_{EGR\ BP}$, dans le conduit EGR BP 20 et permet ainsi d'augmenter la quantité de ces gaz recyclés à l'admission.

Le fonctionnement du moteur 1 est piloté par un calculateur 23. Ce calculateur 23 est relié à un certain nombre de capteurs, comprenant le débitmètre d'air frais 5, le débitmètre de gaz EGR à basse pression 21, le capteur de température 17, une mesure du kilométrage du véhicule et une mesure de la vitesse du véhicule (non représentées sur la figure 1, mais obtenues de manière connue, par exemple à partir de la mesure donnée par un capteur de vitesse de roue du véhicule).

Il est aussi relié à un certain nombre d'actuateurs, comprenant la vanne de réglage de débit d'air 10, la vanne d'échappement 16 et la vanne d'EGR à haute pression 19.

De manière connue, le calculateur 23 commande le moteur 1, c'est-à-dire règle le taux d'EGR HP et le taux d'EGR BP dans le moteur 1, en ajustant la position des différents actuateurs. Par taux d'EGR, on entend d'une manière générale la proportion de gaz d'échappement qui sont recyclés à l'admission du moteur par rapport au débit gazeux total (air et gaz d'échappement) admis dans le moteur.

En d'autres termes, en désignant par $Q_{air}$ le débit d'air frais (mesuré par le débitmètre d'air frais 5), $Q_{EGR\ HP}$ désignant le débit de gaz EGR HP (déterminé lors de la mise au point du moteur, en fonction de la position de la vanne à haute pression 19, du débit d'air frais mesuré par le débitmètre 5 et du débit de gaz EGR BP mesuré par le débitmètre d'EGR à basse pression 21) et $Q_{EGR\ BP}$ désignant le débit de gaz EGR BP (mesuré par le débitmètre d'EGR à basse pression 21), on détermine ces taux par les équations suivantes :

$$(1) \qquad T_{EGR\ HP} = Q_{EGR\ HP} / (Q_{air} + Q_{EGR\ HP} + Q_{EGR\ BP})$$

$$(2) \qquad T_{EGR\ BP} = Q_{EGR\ BP} / (Q_{air} + Q_{EGR\ HP} + Q_{EGR\ BP})$$

$$(3) \qquad T_{EGR} = T_{EGR\ HP} + T_{EGR\ BP} = (Q_{EGR\ HP} + Q_{EGR\ BP}) / (Q_{air} + Q_{EGR\ HP} + Q_{EGR\ BP})$$

, dans lesquelles

$T_{EGR\ HP}$ désigne le taux d'EGR HP,
$T_{EGR\ BP}$ désigne le taux d'EGR BP, et
$T_{EGR}$ désigne le taux d'EGR, somme des taux d'EGR HP et BP.

La proportion de gaz EGR BP $\alpha$ dans le débit d'EGR total peut s'exprimer sous la forme $\alpha = Q_{EGR\ BP} / Q_{EGR}$. La proportion de gaz EGR HP est alors égale à 1- $\alpha$. En d'autres termes, la proportion de gaz EGR BP $\alpha$ est une valeur comprise entre 0 et 1 : elle est égale à 0 quand le calculateur 23 du moteur ne recycle que de l'EGR HP, à 1 quand il ne recycle que de l'EGR BP, et il prend une valeur intermédiaire entre 0 et 1 quand les deux circuits EGR sont utilisées simultanément.

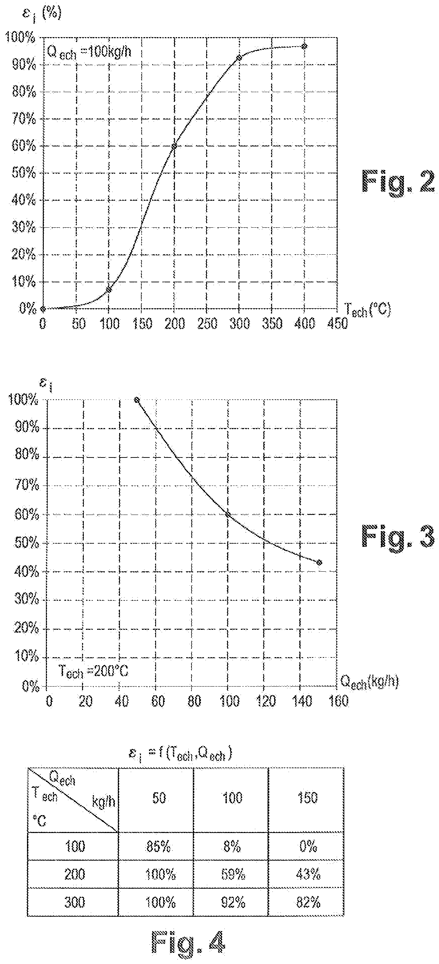

Selon l'invention, on détermine la proportion de gaz EGR BP $\alpha$ en fonction de l'efficacité du catalyseur 3, c'est-à-dire de la capacité de celui-ci à oxyder les molécules de HC et/ou de CO émises par le moteur, ladite efficacité étant plus précisément définie et calculée de la façon suivante en référence aux figures 2 à 6, qui se réfèrent plus particulièrement à l'efficacité de traitement des HC.

La figure 2 représente une relation entre la température des gaz d'échappement $T_{ech}$ dans un catalyseur 3 neuf et l'efficacité instantanée de conversion $\varepsilon_i$ des HC de celui-ci, c'est-à-dire du pourcentage de HC qu'il parvient à oxyder, à un instant donné, pour un débit de gaz d'échappement $Q_{ech}$ constant traversant le catalyseur (dans l'exemple de la figure : 100 kg/h). Une telle courbe peut être obtenue au banc d'essais par analyse de gaz, lors d'un balayage de température.

Une telle courbe pourrait être obtenue de la même manière pour l'efficacité instantanée de traitement du CO, ou encore des HC et du CO ensemble.

De manière similaire à la figure 2, la figure 3 représente une relation entre le débit $Q_{ech}$ et l'efficacité instantanée de conversion $\varepsilon_1$ des HC d'un catalyseur 3 neuf pour une température $T_{ech}$ constante (dans l'exemple de la figure : 200°C). Une telle courbe peut être obtenue par balayage de débit.

A partir de plusieurs essais de balayage de température et de débit, on peut obtenir lors de la mise au point du moteur 1 une cartographie f dont un extrait est représenté sur la figure 4. Une telle cartographie f est une table à deux entrées. donnant l'efficacité instantanée $\varepsilon_i$ de conversion des HC par un catalyseur 3 neuf en fonction de la température $T_{ech}$ et du débit $Q_{ech}$, sous la forme $\varepsilon_i = f(T_{ech}, Q_{ech})$. Elle est stockée dans le calculateur 23.

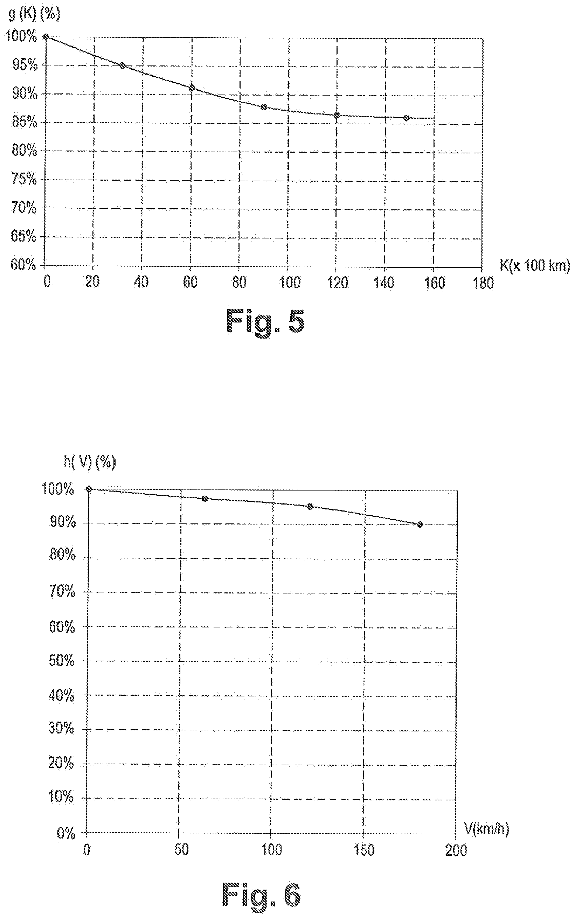

La figure 5 représente la perte d'efficacité instantanée que subit un catalyseur 3 pour un kilométrage K donné du véhicule, par rapport à son efficacité instantanée à l'état neuf. Cette perte d'efficacité, ou vieillissement g qui est une fonction du kilométrage K, peut être déterminée par analyse de gaz au banc d'essais, en comparant l'efficacité instantanée d'un catalyseur 3 neuf (selon la figure 4) avec celle de catalyseurs 3 prélevés sur des véhicules d'essai ayant roulé ou bien vieillis artificiellement au four pour simuler un tel roulage.

A partir de la cartographie f (figure 4) et du vieillissement g (figure 5), on peut calculer à tout moment, sur n'importe quel véhicule en fonctionnement, l'efficacité instantanée $\varepsilon_i$ de son catalyseur 3 grâce à l'équation :

$$(4) \qquad \varepsilon_i = f(T_{ech}, Q_{ech}) * g(K)$$

dans laquelle

- la température des gaz d'échappement $T_{ech}$ peut être mesurée par le capteur de température 17,
- le débit des gaz d'échappement $Q_{ech}$ traversant la catalyseur 3 peut être déterminé à partir du débit d'air $Q_{air}$ mesuré par le débitmètre d'air 5, d'un débit de carburant injecté dans le moteur 1, et du débit $Q_{EGR\,BP}$ de gaz EGR BP mesuré par le débitmètre d'EGR basse pression 21 grâce au principe de conservation de masse, et
- le kilométrage K est déterminé de manière connue en soi par le calculateur 23 (par exemple, par intégration d'un signal de vitesse provenant d'un capteur de vitesse de roue du véhicule).

On constate sur les figures 2 et 3 et 4 que l'efficacité instantanée $\varepsilon_i$ d'un catalyseur 3 est sensible aux variations de température $T_{ech}$ et de débit $Q_{ech}$. De telles variations sont susceptibles de se produire presque instantanément pendant le roulage du véhicule, rendant l'efficacité instantanée $\varepsilon_i$ du catalyseur 3 très rapidement variable également.

Aussi, pour éviter des variations brutales de la proportion de gaz EGR BP $\alpha$, qui nécessiteraient un pilotage brusque de la vanne de réglage de débit d'air 10, de la vanne d'échappement 16 et de la vanne d'EGR à haute pression 19 par le calculateur 23, on détermine la valeur de cette proportion $\alpha$ non pas en fonction de l'efficacité instantanée $\varepsilon_i$, mais en fonction d'une valeur moyenne glissante de l'efficacité instantanée $\varepsilon_i$ sur une plage de temps écoulé.

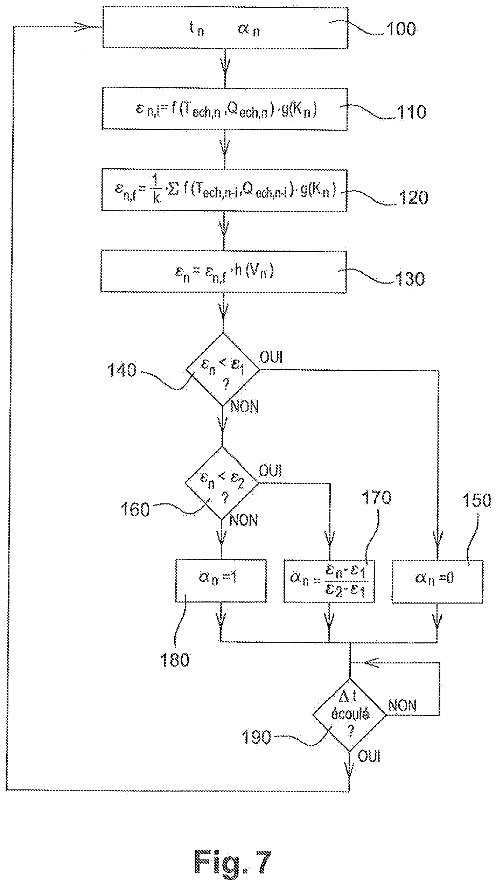

On appelle cette valeur moyenne, qui varie plus lentement, l'efficacité filtrée $\varepsilon_f$ du catalyseur 3. Son calcul est détaillé à la figure 7 (voir l'étape 120 du procédé), dans le cas où l'efficacité instantanée $\varepsilon_i$ n'est pas connue de manière continue mais par des mesures discrètes.

La figure 6 représente enfin la porte d'efficacité que subit un catalyseur 3 pour une vitesse V donnée du véhicule, par rapport à son efficacité filtrée $\varepsilon_f$. Cette perte d'efficacité, ou correction aérodynamique h qui est une fonction de la vitesse, peut être déterminée par analyse de gaz, en recueillant les gaz d'échappement lors de roulages sur des véhicules à différentes vitesses, et à comparer les valeurs obtenues à partir des mesures faites au banc (figures 2 et 3), qui correspondent à une vitesse V de véhicule nulle.

On peut ensuite déterminer à tout moment, sur n'importe quel véhicule en fonctionnement, l'efficacité effective $\varepsilon$ de son catalyseur 3 grâce à l'équation :

$$(5) \qquad \varepsilon = \varepsilon_f * h(V)$$

. dans laquelle la vitesse V est déterminée de manière connue en soi par le calculateur 23 (par exemple, à partir d'un signal de vitesse provenant d'un capteur de vitesse de roue du véhicule), et h(V) désigne la courbe de la figure 6.

La figure 7 représente le logigramme d'un mode de réalisation du procédé selon l'invention. Le procédé comporte une étape d'initialisation 100, lors de laquelle la valeur $\alpha_n$ de la proportion de gaz EGR BP est initialisée, soit à 0 lors d'un démarrage du moteur, soit à une valeur qui a été mémorisée précédemment dans le calculateur 23.

Le procédé comporte une étape de calcul 110 au cours de laquelle le calculateur détermine à l'instant $t_n$ la valeur de l'efficacité instantanée $\varepsilon_{n,i}$ du catalyseur 3 en fonction de la température des gaz d'échappement $T_{ech,n}$ à l'instant $t_n$, du débit des gaz d'échappement $Q_{ech,n}$ traversant le catalyseur 3 à l'instant $t_n$ et du kilométrage du véhicule $K_n$ à l'instant $t_n$ par l'équation :

$$(6) \qquad \varepsilon_{n,i} = f(T_{ech,n}, Q_{ech,n}) * g(K_n)$$

Le procédé comporte une étape de calcul 120 au cours de laquelle le calculateur 23 détermine la valeur de l'efficacité filtrée $\varepsilon_{n,f}$ du catalyseur 3 comme la moyenne glissante sur k-1 précédents intervalles de temps $\Delta t$ de l'efficacité instantanée $\varepsilon_{n,t}$ du catalyseur 3, c'est-à-dire la moyenne glissante des k précédentes valeurs d'efficacité instantanée du catalyseur 3. Avantageusement la plage de temps (k-1)*$\Delta t$ est de l'ordre de quelques dizaines de secondes, par exemple 30 secondes, alors qu'intervalle de temps $\Delta t$ est de l'ordre de quelques dizaines de millisecondes. Le kilométrage $K_n$ étant pratiquement constant sur cette plage de temps (k-1)*$\Delta t$, le calcul s'obtient par les équations :

$$(7)\; \varepsilon_{n,f} = 1/k * \sum f(T_{ech,n-i}, Q_{ech,n-i}) * g(K_n) \quad ,$$

c'est-à-dire de manière développée :

$$(8)\ \varepsilon_{n,f} = 1/k * [\ f(T_{ech,n-(k-1)},Q_{ech,n-(k-1)}) + \ldots\ldots f(T_{ech,n-i},Q_{ech,n-i}) + \ldots\ldots +$$
$$f(T_{ech,n-1},Q_{ech,n-1}) + f(T_{ech,n},Q_{ech,n})] * g(K_n)$$

Le procédé comporte une étape de calcul 130 au cours de laquelle le calculateur 23 détermine l'efficacité effective $\varepsilon_n$ du catalyseur 3 par l'équation :

$$(9)\ \varepsilon_n = \varepsilon_{n,f} * h(\dot{V}_n)$$

Le procédé comporte une première étape de test 140, au cours de laquelle l'efficacité effective $\varepsilon_n$ est comparée à un premier seuil $\varepsilon_1$.

Le premier test 140 oriente, si l'efficacité effective $\varepsilon_n$ est inférieure au premier seuil $\varepsilon_1$, vers une étape 150 au cours de laquelle la proportion $\alpha_n$ de gaz EGR BP prend la valeur 0, ou vers une deuxième étape de test 160 dans le cas contraire.

Le procédé comporte une deuxième étape de test 160, au cours de laquelle l'efficacité effective $\varepsilon_n$ est comparée à un deuxième seuil $\varepsilon_2$.

Le deuxième test oriente, si l'efficacité effective $\varepsilon_n$ est inférieure au deuxième seuil $\varepsilon_2$, vers une étape 170 au cours de laquelle la proportion $\alpha_n$ de gaz EGR BP prend la valeur $(\varepsilon_n - \varepsilon_1)/(\varepsilon_2 - \varepsilon_1)$, ou vers une étape 180 au cours de laquelle elle prend la valeur 1.

Le procédé comprend une étape 190 au cours de laquelle on attend l'écoulement d'un intervalle de temps $\Delta t$, avant de procéder à un nouveau pas de calcul en reprenant à l'étape 100.

En résumé, l'invention propose un procédé de commande d'un moteur 1 à combustion interne suralimenté de véhicule automobile, équipé de deux circuits EGR BP et EGR HP, dans lequel la proportion $\alpha$ de gaz EGR BP recyclés est déterminée en fonction de l'efficacité effective t du catalyseur 3, c'est-à-dire du pourcentage de gaz polluants (par exemple HC) que le catalyseur 3 a oxydé sur le véhicule pendant une plage de temps $(k-1)*\Delta t$ donnée.

Quand le catalyseur 3 est peu efficace (en dessous d'un seuil d'efficacité $\varepsilon_1$), seul des gaz EGR HP sont recyclés. Quand le catalyseur 3 est très efficace (au dessus d'un seuil $\varepsilon_2$), seul des gaz EGR BP sont recyclés. Dans un domaine d'efficacité moyenne du catalyseur 3 (entre les deux seuils $\varepsilon_1$ et $\varepsilon_2$), on recycle à la fois des gaz EGR HP et des gaz EGR BP, la proportion $\alpha$ de gaz EGR BP étant d'autant plus élevée que l'efficacité effective $\varepsilon$ augmente.

L'invention n'est pas limitée à l'efficacité de conversion des émissions d'hydrocarbures imbrûlés HC par le catalyseur 3. En variante, on peut aussi considérer, par exemple, l'efficacité de conversion des émissions de monoxyde de carbone CO.

## Revendications

1. Procédé de traitement des gaz d'échappement d'un moteur (1) à combustion interne suralimenté de véhicule automobile, partiellement recyclés à haute pression et à basse pression à l'admission, ledit procédé comprenant :

   - une étape de remise en circulation d'un débit de gaz EGR haute pression ($Q_{EGR\ HP}$) vers le moteur (1), et
   - une étape de remise en circulation d'un débit de gaz EGR basse pression ($Q_{EGR\ BP}$) vers le moteur (1), l'ensemble de ces débits constituant un débit de gaz EGR total ($Q_{EGR}$), le rapport ($\alpha$) du débit de gaz EGR basse pression ($Q_{EGR\ BP}$) divisé par le débit de gaz EGR total ($Q_{EGR}$) étant déterminé en fonction de l'efficacité effective ($\varepsilon$) d'un catalyseur d'oxydation (3) d'hydrocarbures imbrûlés et de monoxyde de carbone des gaz d'échappement du moteur (1),

   **CARACTERISE EN CE QUE**
   ledit rapport ($\alpha$) prend :

   - la valeur 0 quand l'efficacité effective ($\varepsilon$) est inférieure à un premier seuil ($\varepsilon_1$),
   - la valeur 1 quand l'efficacité effective ($\varepsilon$) est supérieure à un deuxième seuil ($\varepsilon_2$) qui est supérieur au premier seuil ($\varepsilon_1$), et
   - une valeur comprise entre 0 et 1 quand l'efficacité effective ($\varepsilon$) est comprise entre le premier seuil ($\varepsilon_1$) et le deuxième seuil ($\varepsilon_2$).

**2.** Procédé selon la revendication 1, **caractérisé en ce que** le rapport ($\alpha$) du débit de gaz EGR basse pression ($Q_{EGR\ BP}$) divisé par le débit de gaz EGR total (QEGR) est une fonction croissante de l'efficacité effective ($\varepsilon$) du catalyseur d'oxydation (3) quand celle-ci est comprise entre le premier seuil ($\varepsilon_1$) et le deuxième seuil ($\varepsilon_2$).

**3.** Dispositif de traitement des gaz d'échappement d'un moteur (1) à combustion interne de véhicule automobile, comprenant des moyens configurés pour la mise en œuvre de toutes les étapes du procédé selon la revendication 1, associé à :

- un turbocompresseur (2) comprenant un compresseur (7) dans un circuit d'alimentation d'air (4) du moteur et une turbine (13) dans un circuit d'échappement (11) du moteur,
- un catalyseur d'oxydation (3) d'hydrocarbures imbrûlés et de monoxyde de carbone des gaz d'échappement dans le circuit d'échappement (11),
- une première dérivation du circuit d'échappement (11) prélevant par un conduit EGR haute pression (18) un débit de gaz EGR haute pression ($Q_{EGR\ HP}$) dans ce circuit (11) en amont de la turbine (13) et les recyclant dans le circuit d'alimentation (4) en aval du compresseur (7), et
- une deuxième dérivation du circuit d'échappement (11) prélevant par un conduit EGR basse pression (20) un débit de gaz EGR basse pression ($Q_{EGR\ BP}$) dans ce circuit (11) en aval de la turbine (13) et les recyclant dans le circuit d'alimentation (4) en amont du compresseur (7),

le rapport ($\alpha$) de gaz EGR basse pression du débit de gaz EGR basse pression ($Q_{EGR\ BP}$) divisé par le débit de gaz EGR total ($Q_{EGR}$) pouvant être ajustée en fonction de l'efficacité effective ($\varepsilon$) du catalyseur d'oxydation (3).

## Patentansprüche

**1.** Verfahren zur Nachbehandlung der Abgase eines aufgeladenen Verbrennungsmotors (1) eines Kraftfahrzeugs, die unter Hochdruck und unter Niederdruck teilweise zum Einlass zurückgeführt werden, wobei das Verfahren Folgendes beinhaltet:

- einen Schritt der Rezirkulation einer Hochdruck-EGR-Gasmenge ($Q_{EGR\ HP}$) zum Motor (1) und
- einen Schritt der Rezirkulation einer Niederdruck-EGR-Gasmenge ($Q_{EGR\ BP}$) zum Motor (1), wobei die Gesamtheit dieser Mengen eine gesamte EGR-Gasmenge ($Q_{EGR}$) darstellt,

wobei das Verhältnis ($\alpha$) der Niederdruck-EGR-Gasmenge ($Q_{EGR\ BP}$) geteilt durch die gesamte EGR-Gasmenge ($Q_{EGR}$) in Abhängigkeit von dem effektiven Wirkungsgrad ($\varepsilon$) eines Katalysators (3) zur Oxidation von unverbrannten Kohlenwasserstoffen und Kohlenmonoxid der Abgase des Motors (1) bestimmt wird,
**DADURCH GEKENNZEICHNET, DASS**
das Verhältnis ($\alpha$):

- den Wert 0 annimmt, wenn der effektive Wirkungsgrad ($\varepsilon$) niedriger als ein erster Schwellenwert ($\varepsilon_1$) ist, und
- den Wert 1 annimmt, wenn der effektive Wirkungsgrad ($\varepsilon$) größer als ein zweiter Schwellenwert ($\varepsilon_2$) ist, der größer als der erste Schwellenwert ($\varepsilon_1$) ist, und
- einen Wert zwischen 0 und 1 annimmt, wenn der effektive Wirkungsgrad ($\varepsilon$) zwischen dem ersten Schwellenwert ($\varepsilon_1$) und dem zweiten Schwellenwert ($\varepsilon_2$) liegt.

**2.** Verfahren nach Anspruch 1, **dadurch gekennzeichnet, dass** das Verhältnis ($\alpha$) der Niederdruck-EGR-Gasmenge ($Q_{EGR\ BP}$) geteilt durch die gesamte EGR-Gasmenge ($Q_{EGR}$) eine ansteigende Funktion des effektiven Wirkungsgrads ($\varepsilon$) des Oxidationskatalysators (3) ist, wenn dieser zwischen dem ersten Schwellenwert ($\varepsilon_1$) und dem zweiten Schwellenwert ($\varepsilon_2$) liegt.

**3.** Vorrichtung zur Nachbehandlung der Abgase eines Verbrennungsmotors (1) eines Kraftfahrzeugs, die Mittel beinhaltet, die dazu konfiguriert sind, alle Schritte des Verfahrens nach Anspruch 1 umzusetzen, assoziiert mit:

- einem Turbolader (2), der einen Kompressor (7) in einem Luftzufuhrkreislauf (4) des Motors und eine Turbine (13) in einem Abgaskreislauf (11) des Motors beinhaltet,
- einem Katalysator (3) zur Oxidation von unverbrannten Kohlenwasserstoffen und Kohlenmonoxid der Abgase in dem Abgaskreislauf (11),
- einem ersten Abzweig des Abgaskreislaufs (11), der vor der Turbine (13) durch eine Hochdruck-EGR-Leitung (18) eine Hochdruck-EGR-Gasmenge ($Q_{EGR\,HP}$) aus diesem Kreislauf (11) entnimmt und sie in den Zufuhrkreislauf (4) hinter dem Kompressor (7) zurückführt, und
- einem zweiten Abzweig des Abgaskreislaufs (11), der hinter der Turbine (13) durch eine Niederdruck-EGR-Leitung (20) eine Niederdruck-EGR-Gasmenge ($Q_{EGR\,BP}$) aus diesem Kreislauf (11) entnimmt und sie vor dem Kompressor (7) in den Zufuhrkreislauf (4) zurückführt,

wobei das Niederdruck-EGR-Gasverhältnis ($\alpha$) der Niederdruck-EGR-Gasmenge ($Q_{EGR\,BP}$) geteilt durch die gesamte EGR-Gasmenge ($Q_{EGR}$) in Abhängigkeit von dem effektiven Wirkungsgrad ($\varepsilon$) des Oxidationskatalysators (3) eingestellt werden kann.

**Claims**

1. Method for treating the exhaust gases of a motor vehicle supercharged internal combustion engine (1) that are partially recycled at high pressure and at low pressure to the intake, said method comprising:

    - a step of recirculating a high-pressure EGR gas flow ($Q_{EGR\,HP}$) to the engine (1), and
    - a step of recirculating a low-pressure EGR gas flow ($Q_{EGR\,LP}$) to the engine (1), the whole of these flows constituting a total EGR gas flow ($Q_{EGR}$),

    the ratio ($\alpha$) of the low-pressure EGR gas flow ($Q_{EGR\,LP}$) divided by the total EGR gas flow ($Q_{EGR}$) being determined as a function of the effective efficiency ($\varepsilon$) of an oxidation catalyst (3) for oxidizing unburned hydrocarbons and carbon monoxide of the exhaust gases of the engine (1), **CHARACTERIZED IN THAT**
    said ratio ($\alpha$) assumes:

    - the value 0 when the effective efficiency ($\varepsilon$) is less than a first threshold ($\varepsilon_1$),
    - the value 1 when the effective efficiency ($\varepsilon$) is greater than a second threshold ($\varepsilon_2$) which is greater than the first threshold ($\varepsilon_1$), and
    - a value between 0 and 1 when the effective efficiency ($\varepsilon$) is between the first threshold ($\varepsilon_1$) and the second threshold ($\varepsilon_2$).

2. Method according to Claim 1, **characterized in that** the ratio ($\alpha$) of the low-pressure EGR gas flow ($Q_{EGR\,LP}$) divided by the total EGR gas flow ($Q_{EGR}$) is an increasing function of the effective efficiency ($\varepsilon$) of the oxidation catalyst (3) when said efficiency is between the first threshold ($\varepsilon_1$) and the second threshold ($\varepsilon_2$).

3. Device for treating the exhaust gases of a motor vehicle internal combustion engine (1), comprising means configured for implementing all the steps of the method according to Claim 1, which device is associated with:

    - a turbocharger (2) comprising a compressor (7) in an air supply circuit (4) of the engine and a turbine (13) in an exhaust circuit (11) of the engine,
    - an oxidation catalyst (3) for oxidizing unburned hydrocarbons and carbon monoxide of the exhaust gases in the exhaust circuit (11),
    - a first bypass of the exhaust circuit (11) taking, via a high-pressure EGR duct (18), a high-pressure EGR gas flow ($Q_{EGR\,HP}$) from this circuit (11) upstream of the turbine (13) and recycling said EGR gases into the supply circuit (4) downstream of the compressor (7), and
    - a second bypass of the exhaust circuit (11) taking, via a low-pressure EGR duct (20), a low-pressure EGR gas flow ($Q_{EGR\,LP}$) from this circuit (11) downstream of the turbine (13) and recycling said EGR gases into the supply circuit (4) upstream of the compressor (7),

    the ratio ($\alpha$) of low-pressure EGR gases of the low-pressure EGR gas flow ($Q_{EGR\,LP}$) divided by the total EGR gas flow ($Q_{EGR}$) being able to be adjusted as a function of the effective efficiency ($\varepsilon$) of the oxidation catalyst (3).

**Fig. 1**

Fig. 2

Fig. 3

$\varepsilon_i = f(T_{ech}, Q_{ech})$

| $T_{ech}$ °C \ $Q_{ech}$ kg/h | 50 | 100 | 150 |
|---|---|---|---|
| 100 | 85% | 8% | 0% |
| 200 | 100% | 59% | 43% |
| 300 | 100% | 92% | 82% |

Fig. 4

Fig. 5

Fig. 6

11

$$t_n \quad \alpha_n \qquad \text{---} \, 100$$

$$\varepsilon_{n,i} = f\left(T_{ech,n}, Q_{ech,n}\right) \cdot g(K_n) \qquad \text{---} \, 110$$

$$\varepsilon_{n,f} = \frac{1}{k} \cdot \Sigma \, f\left(T_{ech,n-i}, Q_{ech,n-i}\right) \cdot g(K_n) \qquad \text{---} \, 120$$

$$\varepsilon_n = \varepsilon_{n,f} \cdot h(V_n) \qquad \text{---} \, 130$$

$$140 \qquad \varepsilon_n < \varepsilon_1 \, ? \qquad \text{OUI}$$

NON

$$160 \qquad \varepsilon_n < \varepsilon_2 \, ? \qquad \text{OUI}$$

NON

170     150

$$\alpha_n = 1 \qquad \alpha_n = \frac{\varepsilon_n - \varepsilon_1}{\varepsilon_2 - \varepsilon_1} \qquad \alpha_n = 0$$

180

$$190 \qquad \Delta t \; \text{écoulé} \, ? \qquad \text{NON}$$

OUI

**Fig. 7**

## RÉFÉRENCES CITÉES DANS LA DESCRIPTION

**Documents brevets cités dans la description**

- WO 20081068574 A1
- EP 1965050 A1